# EUROPEAN PATENT APPLICATION

(11) **EP 3 654 432 A1**
(43) Date of publication of application: **20.05.2020**
(21) Application number: 17917325.7
(22) Date of filing: 15.08.2017
(51) Int. Cl.: H01M 10/04

(54) **STACKING APPARATUS FOR FLEXIBLE PACKAGING BATTERY**

(30) Priority: 11.07.2017 CN 201710561019
(71) Applicant: Wuhan Yifi Laser Equipment Co., Ltd., Wuhan, Hubei 430074 (CN)
(72) Inventor: RAN, Changlin, Wuhan Hubei 430074 (CN); ZHANG, Wenhua, Wuhan Hubei 430074 (CN)
(74) Representative: Geskes, Christoph
(86) International application number: PCT/CN2017/097444
(87) International publication number: WO 2019/010748

(57) **Abstract**

A stacking device for a flexible packaging battery, the device comprising a carrier plate (10) and a bus plate positioning support (20), wherein the bus plate positioning support (20) is disposed perpendicular to an upper surface of the carrier plate (10); the upper surface of the carrier plate (10) is a plane for bearing a flexible packaging battery; and the bus plate positioning support (20) is a U-shaped plate having an opening away from the upper surface of the carrier plate (10) and used for fixing a bus plate. The stacking device for a flexible packaging battery achieves automatic battery stacking. Moreover, because of the high efficiency and accuracy of machine operation, the production efficiency is improved.

## Description

### CROSS-REFERENCE TO RELATED APPLICATION

The present application claims priority to Chinese Patent Application No. 2017105610197, filed on July 11, 2017, entitled "Stacking Device for Flexible Packaging Batteries", the disclosure of which is incorporated herein by reference in its entirety.

### BACKGROUND

### Technical Field

The present disclosure relates to the field of electric vehicle technologies, and more specifically, to a stacking device for flexible packaging batteries.

### Description of the Related Art

As a kind of power battery, a flexible packaging batteries are favored by users at home and abroad due to its advantages of light weight, thinness, long cycle life, good safety performance, high energy density, stable discharge plateau, excellent power performance, environmental protection, no pollution and etc. Moreover, there are great demands for the flexible packaging batteries in various fields such as electric bicycles, electric motorcycles, electric vehicles and etc.

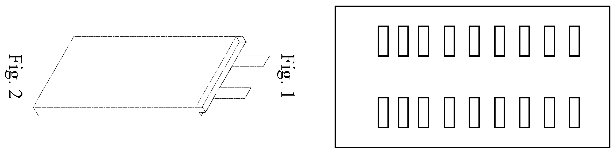

In the production process of the flexible packaging battery pack in the prior art, the two electrodes of a plurality of flexible packaging batteries are usually inserted into the corresponding two rows of jacks on the bus plate by manually holding the bus plate, so as to stack the plurality of flexible packaging batteries for subsequent soldering. Fig. 1 is a structural diagram of the bus plate. Fig. 2 is a structural diagram of the flexible packaging battery. However, in the process of manual operation, operators often make errors in operation due to the dense jacks on the bus plate, resulting in low production efficiency of the flexible packaging battery pack, which is difficult to meet the large market demand.

Therefore, the R&D personnel in the industry consider using precise and efficient mechanized operations to achieve the automatic production of flexible packaging battery packs. However, in the automatic stacking process of batteries, there is an urgent need for a stacking device for carrying the flexible packaging battery packs and bus plates, instead of the operation of manually holding the bus plate, so that the stacking of the flexible packaging batteries is achieved on the device platform by robot arms.

### BRIEF SUMMARY

The present disclosure provides a stacking device for flexible packaging batteries, so as to solve the problem in the prior art that in the manual operation process of stacking the flexible packaging batteries, errors are made in operations frequently due to the dense jacks on the bus plate, resulting in low production efficiency, which is difficult to meet the large market demand.

The present disclosure provides a stacking device for flexible packaging batteries. The device includes a carrier plate and a bus plate positioning support; wherein the bus plate positioning support is disposed perpendicular to an upper surface of the carrier plate; the upper surface of the carrier plate is a plane for carrying the flexible packaging batteries; and the bus plate positioning support is a U-shaped plate having an opening away from the upper surface of the carrier plate and configured to fix a bus plate.

In combination with a first available implementation of the present disclosure, in a second available implementation, the device further includes a lifting pillar; wherein the lifting pillar is moveable upwards and downwards, and is located below the carrier plate for supporting the carrier plate.

In combination with the first available implementation of the present disclosure, in a third available implementation, the bus plate positioning support further includes a base; the base includes two rectangular plates that are vertically connected one of which is connected to the lower edge of the U-shaped plate, and the other is fixed to the upper surface of the carrier plate.

In combination with the third available implementation of the present disclosure, in a fourth available implementation, the device further includes a supporting block; an upper surface of the supporting block is a plane, and the supporting block is placed on the upper surface of the carrier plate at a position on one side of the U-shaped plate and facing the U-shaped plate.

In combination with the fourth available implementation of the present disclosure, in a fifth available implementation, a height of the supporting block is equal to a distance between the bottom of the U-shaped opening of the U-shaped plate and the upper surface of the carrier plate.

In combination with the first available implementation of the present disclosure, in a sixth available implementation, the bus plate positioning support further includes two fixing devices located at left and right sides of the U-shaped plate, respectively for fixing the bus plate.

In combination with the sixth available implementation of the present disclosure, in a seventh available implementation, each of the fixing devices is a quick-pressing plier.

In combination with the first available implementation of the present disclosure, in an eighth available implementation, the bus plate positioning support further includes two elongated slots; the two elongated slots are disposed along inner edges at the left and right sides of the U-shaped plate, for inserting and fixing the bus plate.

By disposing the bus plate positioning support perpendicular to the upper surface of the carrier plate, configuring the upper surface of the carrier plate to be a plane for carrying the flexible packaging batteries, configuring the bus plate positioning support to be a U-shaped plate having an opening away from the upper surface of the carrier plate and for fixing the bus plate, and inserting the electrodes of the flexible packaging batteries into the bus plate fixed on the bus plate positioning support through robot arms, the stacking device for flexible packaging battery provided by the present disclosure can automatically stack batteries with high efficiency and accuracy, and the production efficiency is improved significantly.

### BRIEF DESCRIPTION OF THE DRAWINGS

Fig. 1 is a structural diagram of the bus plate in the prior art;
Fig. 2 is a structural diagram of a flexible packaging battery in the prior art.
Fig. 3 is a diagram of the stacking device for flexible packaging batteries according to an embodiment of the present disclosure.

### DETAILED DESCRIPTION

The specific implementations of the present disclosure will be further described in detail hereinafter with reference to the accompanying drawings and embodiments. The following embodiments are used to illustrate the present disclosure, but are not intended to limit the scope thereof.

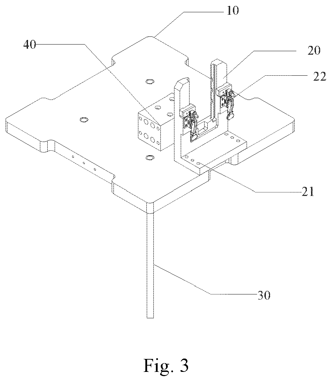

Fig. 3 is a diagram of the stacking device for flexible packaging batteries according to an embodiment of the present disclosure. As shown in Fig. 3, the present embodiment provides a stacking device for flexible packaging batteries, including a carrier plate 10 and a bus plate positioning support 20, wherein, the bus plate positioning support 20 is disposed perpendicular to an upper surface of the carrier plate 10; the upper surface of the carrier plate 10 is a plane for carrying the flexible packaging batteries; and the bus plate positioning support 20 is a U-shaped plate having an opening away from the upper surface of the carrier plate 10 and configured to fix the bus plate.

In the present embodiment, the area of the carrier plate 10 for carrying the flexible packaging batteries is greater than or equal to those of the flexible packaging batteries, so as to provide a sufficiently stable support for the flexible packaging battery. The shape of the carrier plate 10 can be selected freely according to the actual size of the operating space and is not specifically limited by the present embodiment. The material of the carrier plate 10 can be selected freely on the basis that the weights of the plurality of flexible packaging batteries and the bus plate may be borne and is not specifically limited by the present embodiment either.

In the present embodiment, the bus plate positioning support 20 for fixing the bus plate is a U-shaped plate, which is disposed perpendicular to the upper surface of the carrier plate 10 and has an opening away from the upper surface of the carrier plate 10. By disposing the bus plate positioning support 20 perpendicular to the upper surface of the carrier plate 10, the battery body is fitted to the carrier plate 10 after electrodes of the flexible packaging batteries are inserted into the bus plate, so that the battery body can be completely supported by the carrier plate 10 , thereby avoiding the bending of the electrodes caused by the interaction between the electrodes and the bus plate. Specifically, when the bus plate is fixed, the bus plate is placed at the U-shaped opening of the U-shaped plate and fixed, so as to ensure that the electrodes of the flexible packaging batteries cannot be blocked and deformed when passing through the through-holes in the bus plate. The material of the U-shaped plate can be selected according to actual conditions and is not specifically limited by the present embodiment either.

By disposing the bus plate positioning support perpendicular to the upper surface of the carrier plate, configuring the upper surface of the carrier plate to be a plane for carrying the flexible packaging batteries, configuring the bus plate positioning support to be a U-shaped plate having an opening away from the upper surface of the carrier plate and for fixing the bus plate, and inserting the electrodes of the flexible packaging batteries into the bus plate fixed on the bus plate positioning support through robot arms, the stacking device for flexible packaging battery provided by the present disclosure achieves the automatic battery stacking, and because of the high efficiency and accuracy of machine operation, the production efficiency is improved significantly.

Based on the embodiment above, the device further includes a lifting pillar 30. The lifting pillar 30 is moveable upwards and downwards, and is located below the carrier plate 10 for supporting the carrier plate 10.

In the present embodiment, the lifting pillar 30 can be one pillar or a plurality of pillars. The specific number can be set according to actual conditions and is not specifically limited by the present embodiment. The pillar can be a cylinder or a cuboid pillar and is specifically limited by the present embodiment either. The lifting pillar 30 is located below the carrier plate 10 for supporting the carrier plate 10. The lifting pillar 30 is in contact with but not connected to the carrier plate, so that when the lifting pillar 30 descends to a place where the carrier plate 10 is in contact with the conveyor belt, the carrier plate 10 can be separated from the lifting pillar 30 and transported to the next processing place by the conveyor belt.

Based on the embodiments above, the bus plate positioning support 20 further includes a base 21. The base 21 includes two rectangular plates that are vertically connected one of which is connected to a lower edge of the U-shaped plate, and the other is fixed to the upper surface of the carrier plate 10.

In the present embodiment, the bus plate positioning support 20 is a plate structure disposed perpendicular to the carrier plate 10, and the contact surface with the carrier plate 10 is a rectangle having a very small width, and it is disadvantageous for fixing if the area is very small. By connecting one rectangular plate of the base 21 to the lower portion of the U-shaped plate, and fixing the other rectangular plate on the upper surface of the carrier plate 10, the bus plate positioning support can be more stably fixed on the carrier plate 10. In an embodiment of the present disclosure, when the base 21 is connected to both the lower portion of the U-shaped plate, and the carrier plate 10, the connection mode used may be welding or screw connection or etc. and is not specifically limited by the present embodiment.

Based on the embodiments above, the device further includes a supporting block 40. The upper surface of the supporting block 40 is a plane, and the supporting block 40 is placed on the upper surface of the carrier plate 10 at a position on one side of the U-shaped plate and facing the U-shaped plate.

In the present embodiment, since the U-shaped plate is connected to the carrier plate 10 through the base 21, the length of the bottom of the U-shaped opening of the U-shaped plate becomes large. Therefore, when the electrodes of the flexible packaging batteries are inserted into the bus plate at the U-shaped opening of the U-shaped plate, the flexible packaging battery body cannot be fit to the upper surface of the carrier plate 10, and the electrodes may be deformed under the action of the bus plate. By putting the supporting block 40 under the flexible packaging battery body, the flexible packaging battery body remains be flushed with the electrodes under the support of the supporting block 40, and the possibility that the electrodes are deformed under the action of the bus plate is avoided. In an embodiment of the present disclosure, the material and shape of the supporting block 40 can be selected according to actual conditions and are not specifically limited by the present embodiment.

Based on the embodiments above, the height of the supporting block 40 is equal to the distance between the bottom of the U-shaped opening of the U-shaped plate and the upper surface of the carrier plate 10.

In the present embodiment, if the height of the supporting block 40 is not equal to the distance between the bottom of the U-shaped opening of the U-shaped plate and the upper surface of the carrier plate 10, there is still a possibility that the electrodes are deformed under the action of the bus plate. Therefore, the height of the supporting block 40 is determined by allowing it is equal to the distance between the bottom of the U-shaped opening of the U-shaped plate and the upper surface of the carrier plate 10, so that it is ensured that the flexible packaging battery body remains be flushed with the electrodes under the support of the supporting block 40, and the electrodes will not be deformed under the action of the bus plate.

Based on the embodiments above, the bus plate positioning support further includes two fixing devices 22. The two fixing devices 22 are located respectively at the left and right sides of the U-shaped plate, for fixing the bus plate.

In the present embodiment, the bus plate is fixed at the U-shaped opening of the U-shaped plate by the bus plate positioning support through the two fixing devices 22. The two fixing devices 22 are located respectively on two vertical plates perpendicular to the carrier plate 10 at the two sides of the U-shaped plate. Whether the positions of the two fixing devices 22 on the vertical plates are symmetrical is not specifically limited in the present embodiment. The fixing mode may be clamping, screw fixing, or etc. and is not specifically limited by the present embodiment.

Based on the embodiments above, the fixing devices 22 are quick-pressing pliers.

In the present embodiment, the quick-pressing pliers that fix the bus plate by clamping, are used as the fixing devices 22. The manner of replacing the bus plate by the quick-pressing pliers used in the present embodiment is very convenient and efficient.

Based on the embodiments above, the bus plate positioning support further includes two elongated slots. The two elongated slots are disposed along the inner edges at the left and right sides of the U-shaped plate, for inserting and fixing the bus plate.

In the present embodiment, the bus plate positioning support fixes the bus plate through the two elongated slots disposed along the inner edges at the left and right sides of the U-shaped plate. Specifically, when fixing the bus plate, the edges of the two sides of the bus plate are aligned to the two elongated slots and are inserted in to the elongated slots. The present embodiment uses two elongated slots to fix the bus plate without extra devices, so that the stacking device has a simpler structure and lower cost.

In summary, the embodiments of the present disclosure are only preferred embodiments and are not intended to limit the scope of the present disclosure. Any modifications, equivalent replacements and improvements made within the spirit and principle of the present disclosure shall be within the protection scope of the present disclosure.

## Claims

1. A stacking device for flexible packaging batteries, comprising a carrier plate and a bus plate positioning support;
wherein the bus plate positioning support is disposed perpendicular to an upper surface of the carrier plate;
the upper surface of the carrier plate is a plane for carrying flexible packaging batteries;
and the bus plate positioning support is a U-shaped plate having an opening away from the upper surface of the carrier plate and configured to fix a bus plate.

2. The device of claim 1, further comprising a lifting pillar;
wherein the lifting pillar is moveable upwards and downwards, and is located below the carrier plate for supporting the carrier plate.

3. The device of claim 1, wherein the bus plate positioning support further includes a base;
wherein the base includes two rectangular plates that are vertically connected, one of which is connected to a lower edge of the U-shaped plate, and the other is fixed to the upper surface of the carrier plate.

4. The device of claim 3, further comprising a supporting block;
wherein an upper surface of the supporting block is a plane, and the supporting block is placed on the upper surface of the carrier plate at a position on one side of the U-shaped plate and facing the U-shaped plate.

5. The device of claim 4, wherein a height of the supporting block is equal to a distance between the bottom of a U-shaped opening of the U-shaped plate and the upper surface of the carrier plate.

6. The device of claim 1, wherein the bus plate positioning support further includes two fixing devices;
wherein the two fixing devices are located respectively at left and right sides of the U-shaped plate, for fixing the bus plate.

7. The device of claim 6, wherein each of the fixing devices is a quick-pressing plier.

8. The device of claim 1, wherein the bus plate positioning support further includes two elongated slots;
wherein the two elongated slots are disposed along inner edges at left and right sides of the U-shaped plate, for inserting and fixing the bus plate.

9. The device of claim 1, wherein an area of the carrier plate for carrying the flexible packaging batteries is greater than or equal to those of the flexible packaging batteries.
